# EUROPEAN PATENT APPLICATION

(11) **EP 3 610 945 A1**
(43) Date of publication of application: **19.02.2020**
(21) Application number: 18189279.5
(22) Date of filing: 16.08.2018
(51) Int. Cl.: B01J 20/28, B01J 20/12, B01J 20/16, B01J 20/18, B01J 20/32

(54) **A MATERIAL AND A METHOD FOR THE REMOVAL OF POLLUTANTS FROM WATER**

(71) Applicant: Sibelco Nederland N.V., 6223 EP Maastricht (NL)
(72) Inventor: PRUSISZ, Bartlomiej, 6223 EP Maastricht (NL); MAST, Adriana Pieternella, 6223 EP Maastricht (NL); HOFMAN-CARIS, Carola Huberta Maria, 3433 PE Nieuwegein (NL); TOLKAMP, Harry, 3433 PE Nieuwegein (NL); BAUERLEIN, Patrick, 3433 PE Nieuwegein (NL)
(74) Representative: Bond, Christopher William

(57) **Abstract**

The present invention relates to an adsorbent material for adsorbing a pharmaceutical, a pharmaceutical metabolite, or a pharmaceutical and a pharmaceutical metabolite. The present invention also relates to a method of forming an adsorbent material. The present invention also relates to a method of adsorbing a pharmaceutical, a pharmaceutical metabolite, or a pharmaceutical and a pharmaceutical metabolite, from water.

## Description

The present disclosure was co-financed by 'Topconsortium Kennis & Innovatie (TKI)' of the Dutch ministry of Economic Affairs.

### Field of disclosure

The present invention relates to an adsorbent material for adsorbing a pharmaceutical, a pharmaceutical metabolite, or a pharmaceutical and a pharmaceutical metabolite. The present invention also relates to a method of forming an adsorbent material. The present invention also relates to a method of adsorbing a pharmaceutical, a pharmaceutical metabolite, or a pharmaceutical and a pharmaceutical metabolite, from water.

### Background

Pharmaceuticals and pharmaceutical metabolites are not currently effectively removed from sewage and waste, resulting in pharmaceuticals and pharmaceutical metabolites entering water supplies. The presence of pharmaceuticals and their metabolites in water supplies poses a serious health risk to wildlife and the pharmaceuticals and pharmaceutical metabolites can enter human drinking water supplies, potentially causing adverse effects in humans. Existing water treatment plants are not usually designed for the removal of pharmaceutical or pharmaceutical metabolites. The removal of pharmaceuticals and pharmaceutical metabolites is a growing problem in water treatment technologies.

Current water treatment technologies used to remove pharmaceuticals and pharmaceutical metabolites are costly and inefficient. Ozonation methods are often used to remove pharmaceuticals and pharmaceutical metabolites from water supplies.

Ozonation methods require the production of ozone. Ozone is typically formed from oxygen by the following reaction:

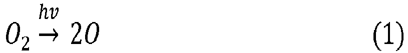

*O* + *O*₂ → *O*₃ (2)

where O₂ is oxygen, *hv* is ultraviolet light, O is singlet oxygen and O₃ is ozone.

The production of ozone requires an input of energy. Methods of forming ozone in a laboratory include an electric discharge field created by a CD-type ozone generator (which has a corona discharge that simulates lightning) or ultraviolet radiation such as an UV-type ozone generator (which simulates the ultraviolet rays from the sun).

In addition to the above two commercial methods of forming ozone, ozone may also be made through electrolytic or chemical reactions.

To produce ozone, small-scale systems typically use a UV-type generator, whilst large-scale systems typically use corona discharge or other bulk-ozone producing methods.

As an example, when a system uses the method of applying a corona discharge to form ozone, the dry, clean air that passes through the high voltage electric discharge will create an ozone concentration of approximately 1% or 10 000 mg L⁻¹.

In an ozonation method, untreated water is exposed to ozone. The untreated water can be passed through a venturi throat which creates a vacuum and pulls the ozone gas into the water, or by bubbling ozone through the raw water. The ozone will react with metals present in the water to form insoluble metal oxides. To remove the insoluble metal oxides, filtration is required.

There are advantages of using ozonation as a method to treat water. One advantage is that ozone has an effect over a wide pH range and will react rapidly with bacteria, viruses and protozoans, another advantage is that ozone has stronger germicidal properties then chlorination. In addition, ozone has a strong oxidising power and therefore a short reaction time as well as not requiring any chemicals to be added to the water. Lastly, ozone can eliminate a wide variety of inorganic, organic, microbiological, taste and odour problems.

However, ozonation is not without disadvantages. One disadvantage is that ozonation requires a high equipment and operational cost. This requirement is further exacerbated by the chemistry of the method requiring a professional and proficient person to be employed. In addition, the technology may produce carcinogenic by-products, these may include brominated by-products, aldehydes, ketones and carboxylic acids. Furthermore, a pre-treatment for hardness reduction or the additional polyphosphate may be required to prevent the formation of carbonate scale. Lastly, other disadvantages include (a) requiring a special mixing method because ozone is less soluble than water and (b) the creation of ozone may be a potential fire hazard and cause toxicity issues.

To address the disadvantages associated with ozonation, alternative technologies are being developed. For example, a toilet rim block called pCure™ is currently on the market. pCure™ is said to use an enzyme technology to remove emitted medicines directly from waste. The enzymes are natural, especially developed enzymes that can immediately remove pharmaceutical residue. The rim block prevents the release of harmful pharmaceutical residues into nature. The rim block will release enzymes every time a toilet is flushed. The rim block method of working is two-fold: (a) enzymes remaining from the previous flush; and (b) enzymes that come with the new flush that begins to work as soon as they enter the water.

There is a need for a more effective water treatment technology for the removal of pharmaceuticals and their metabolites from water supplies. A preferred alternative technology would be more cost effective and simple, with less likelihood of producing toxic and/or damaging by-products.

The present invention is now described with reference to the following clauses:
1. An adsorbent material for adsorbing a pharmaceutical, a pharmaceutical metabolite, or a pharmaceutical and a pharmaceutical metabolite, the adsorbent material comprising:
   a porous mineral; and,
   a silane bonded to the surface of the porous mineral;
   wherein, the silane bonded to the surface of the porous mineral can adsorb a pharmaceutical, a pharmaceutical metabolite, or a pharmaceutical and a pharmaceutical metabolite.
2. The adsorbent material of clause 1, wherein the adsorbent material has a density of greater than 1 kg L⁻¹.
3. The adsorbent material of clause 1 or clause 2, wherein the porous mineral is a naturally occurring or a synthetic mineral with a specific surface area of 14 m²/g or higher, as obtained by the Brunauer-Emmett-Teller (BET) adsorption method; optionally, wherein the porous mineral has a specific surface area of 20 m²/g or higher, as obtained by the Brunauer-Emmett-Teller (BET) adsorption method; optionally, wherein the porous mineral has a specific surface area of from 20 m²/g to 100 m²/g, as obtained by the Brunauer-Emmett-Teller (BET) adsorption method; optionally, wherein the Brunauer-Emmett-Teller (BET) adsorption method is carried out with a Micrometrics™ Gemini VI Surface Area Analyser.
4. The adsorbent material of any one of clauses 1 to 3, wherein the porous mineral comprises, or consists of, particles of porous mineral with a maximum dimension of from 1 µm to 50 µm.
5. The adsorbent material of any one of clauses 1 to 4, wherein the porous mineral comprises, or consists of, particles of porous mineral with a maximum dimension of from 1 µm to 5 µm.
6. The adsorbent material of any one of clauses 1 to 5, wherein the porous mineral comprises, or consists of: clinoptilolite, chabazite, kaolin, bentonite, montmorillonite, illite, natural zeolites, synthetic zeolites, clays, micas, phyllosilicates, aluminosilcates or silicates.
7. The adsorbent material of any one of clauses 1 to 6, wherein the porous mineral comprises, or consists of: clinoptilolite, chabazite, kaolin, bentonite, montmorillonite or illite.
8. The adsorbent material of any one of clauses 1 to 7, wherein the silane bonded to the surface of the porous mineral is an alkoxysilane.
9. The adsorbent material of clause 8, wherein the alkoxysilane has the formula:
   R₁O-SiR₂R₃R₄, where R₁ is an organic group and R₂,R₃ and R₄ can be the same or different and can be H, an organic group or O bonded to an organic group.
10. The adsorbent material of clause 9, wherein R₂, R₃ and R₄ are -OCH₃ and R₁ is a substituted or unsubstituted organic group; optionally, wherein R₁ is:
   -C₆H₅; -CH₂C₆H₅; -(CH₂)₂C₆H₅; -(CH₂)₃C₆H₅; -(CH₂)₄C₆H₅; -CH₂NHC₆H₅;-(CH₂)₂NHC₆H₅; -(CH₂)₃NHC₆H₅; -(CH₂)₄NHC₆H₅; -CH₂N⁺(CH₃)₂CH₂(CH₂)₁₆CH₃.Cl⁻;-(CH₂)₂N⁺(CH₃)₂CH₂(CH₂)₁₆CH₃-Cl⁻; -(CH₂)₃N⁺(CH₃)₂CH₂(CH₂)₁₆CH₃.Cl⁻;-CH₂N⁺(CH₃)₂CH₂(CH₂)ₓCH₃.Cl⁻; ⁻(CH₂)₂N⁺(CH₃)₂CH₂(CH₂)ₓCH₃-Cl⁻;-(CH₂)₃N⁺(CH₃)₂CH₂(CH₂)ₓCH₃.Cl⁻, wherein x is 1, 2, 3, 4, 5, 6, 7, 8, 9, 10, 11, 12, 13, 14, 15, 17, 18, 19 or 20.
11. The adsorbent material of clause 9 or clause 10, wherein the one or more organic groups are the same or different and are an alkyl, an aliphatic and/or an aryl group.
12. The adsorbent material of any one of clauses 1 to 11, wherein the silane bonded to the surface of the porous mineral is:
   trimethoxy phenyl silane with the formula: 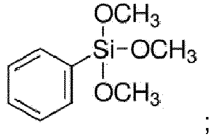 or,
   trimethoxyl silyl propyl aniline with the formula: 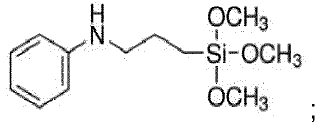 or,
   dimethyl octadecyl [(3-trimethoxy silyl)propyl] ammonium chloride with the formula: 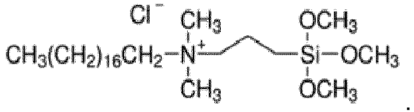
13. The adsorbent material of any one of clauses 1 to 12, wherein the porous mineral is clinoptilolite and the silane bonded to the surface of the porous mineral is dimethyl octadecyl [(3-trimethoxy silyl)propyl] ammonium chloride, with the formula: 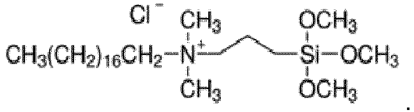
14. The adsorbent material of any one of clauses 1 to 13, wherein the porous mineral is clinoptilolite; optionally, wherein the porous mineral is Ankerfume A25.
15. The adsorbent material of any one of clauses 1 to 14, wherein the adsorbent material comprises, or consists of:
   from 75% by weight to 98% by weight porous mineral; and,
   from 2% by weight to 25% by weight silane bonded to the surface of the porous mineral;
   optionally, plus any unavoidable impurities.
16. The adsorbent material of any one of clauses 1 to 15, wherein the adsorbent material comprises, or consists of:
   from 80% by weight to 90% by weight porous mineral; and,
   from 10% by weight to 20% by weight silane bonded to the surface of the porous mineral;
   optionally, plus any unavoidable impurities.
17. The adsorbent material of any one of clauses 1 to 16, wherein the is pharmaceutical is, or the pharmaceutical metabolite is derived from, any one of:
   Diclofenac, Carbamazepine, lopamidol, Acetyl Sulfadiazine, Bezafibrate, Clofibric Acid, Diatrizoic Acid, Furosemide, Gemfibrozil, Ibuprofen, Ketoprofen, Naproxen, Niacin, Paroxetine and Sulfamethoxazole.
18. The adsorbent material of any one of clauses 1 to 17, wherein the adsorbent material for adsorbing a pharmaceutical, a pharmaceutical metabolite, or a pharmaceutical and a pharmaceutical metabolite, consists of:
   a porous mineral; and,
   a silane bonded to the surface of the porous mineral;
   wherein, the silane bonded to the surface of the porous mineral can adsorb a pharmaceutical, a pharmaceutical metabolite, or a pharmaceutical and a pharmaceutical metabolite.
19. The adsorbent material of any one of clauses 1 to 18, wherein the adsorbent material is formulated as a toilet block, a urinal block, a gel, granules or powder.
20. A method of forming an adsorbent material, the adsorbent material for adsorbing a pharmaceutical, a pharmaceutical metabolite, or a pharmaceutical and a pharmaceutical metabolite, the adsorbent material comprising: a porous mineral; and, a silane bonded to the surface of the porous mineral; wherein, the silane bonded to the surface of the porous mineral can adsorb a pharmaceutical, a pharmaceutical metabolite, or a pharmaceutical and a pharmaceutical metabolite; the method comprising the steps of:
   providing a porous mineral;
   contacting the porous mineral with a silane; and,
   bonding the silane to the surface of the porous mineral.
21. A method of forming an adsorbent material, the adsorbent material according to any one of clauses 1 to 19; the method comprising the steps of:
   providing a porous mineral;
   contacting the porous mineral with a silane; and,
   bonding the silane to the surface of the porous mineral.
22. The method of clause 20 or clause 21, further comprising the step of heating the adsorbent material to: from 80°C to 95°C; or, from 85°C to 90°C.
23. The method of any one of clauses 20 to 22, further comprising the step of washing the adsorbent material to remove non-bonded silane.
24. A method of adsorbing a pharmaceutical, a pharmaceutical metabolite, or a pharmaceutical and a pharmaceutical metabolite, from water, the method comprising the steps of:
   providing an adsorbent material comprising a porous mineral and a silane bonded to the surface of the porous mineral;
   contacting the adsorbent material with water containing a pharmaceutical, a pharmaceutical metabolite, or a pharmaceutical and a pharmaceutical metabolite; and,
   adsorbing the pharmaceutical, pharmaceutical metabolite, pharmaceutical and pharmaceutical metabolite, onto the adsorbent material.
25. The method of clause 24, wherein the adsorbent material is an adsorbent material according to any one of clauses 1 to 19.

The present invention provides an adsorbent material that adsorbs pharmaceuticals and pharmaceutical metabolites at their source, for example adsorbing the pharmaceuticals and/or pharmaceutical metabolites in a toilet or urinal. The solid adsorbent material containing adsorbed pharmaceuticals and pharmaceutical metabolites can be removed, in solid form, by current existing water treatment technologies more easily than if the pharmaceuticals and pharmaceutical metabolites are in aqueous solution.

The adsorbent material of the present invention can be used in sewage treatment methods. However, the invention is not restricted to that particular use and can be applied to any system requiring the removal of pharmaceuticals and/or pharmaceutical metabolites from an aqueous system.

### Brief description of the drawings

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g., boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1 shows the adsorption of Diclofenac by an adsorbent composed of silica which has been surface modified by dimethyl octadecyl [(3-trimethoxy silyl)propyl] ammonium chloride.
Figure 2 shows the adsorption of Diclofenac by an adsorbent composed of Ankerfume A25 which has been surface modified by dimethyl octadecyl [(3-trimethoxy silyl)propyl] ammonium chloride.
Figure 3 shows the adsorption of Diclofenac by an adsorbent composed of Ankerfume A25 which has been surface modified by dimethyl octadecyl [(3-trimethoxy silyl)propyl] ammonium chloride.
Figure 4 shows the adsorption of Bezafibrate by an adsorbent composed of Ankerfume A25 which has been surface modified by dimethyl octadecyl [(3-trimethoxy silyl)propyl] ammonium chloride.
Figure 5 shows the adsorption of Gemfibrozile by an adsorbent composed of Ankerfume A25 which has been surface modified by dimethyl octadecyl [(3-trimethoxy silyl)propyl] ammonium chloride.
Figure 6 shows the adsorption of Sulfamethoxazole by an adsorbent composed of Ankerfume A25 which has been surface modified by dimethyl octadecyl [(3-trimethoxy silyl)propyl] ammonium chloride.
Figure 7 shows the adsorption of Ketoprofen by an adsorbent composed of Ankerfume A25 which has been surface modified by dimethyl octadecyl [(3-trimethoxy silyl)propyl] ammonium chloride.
Figure 8 shows the adsorption of Naproxen by an adsorbent composed of Ankerfume A25 which has been surface modified by dimethyl octadecyl [(3-trimethoxy silyl)propyl] ammonium chloride.
Figure 9 shows the adsorption of Salicylic Acid by an adsorbent composed of Ankerfume A25 which has been surface modified by dimethyl octadecyl [(3-trimethoxy silyl)propyl] ammonium chloride.
Figure 10 is a graph comparing the adsorption of Bezafibrate, Gemfibrozile, Sulfamethoxazole, Ketoprofen, Naproxen and Salicylic Acid by an adsorbent composed of Ankerfume A25 which has been surface modified by dimethyl octadecyl [(3-trimethoxy silyl)propyl] ammonium chloride.

### Detailed description

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.

Embodiments of the claims may, however, be embodied in many different forms and should not be construed as limited to the embodiments set forth herein. The examples set forth herein are non-limiting examples and are merely examples among other possible examples.

Some of the terms used to describe the present invention are set out below:
"Porous mineral" refers to naturally occurring or synthetic minerals which have a specific surface area of 14 m²/g or higher, as obtained by the Brunauer-Emmett-Teller (BET) adsorption method. Optionally, "porous mineral" refers to naturally occurring or synthetic minerals which have a specific surface area of 20 m²/g or higher; optionally, from 20 m²/g to 100 m²/g, as obtained by the Brunauer-Emmett-Teller (BET) adsorption method. Non-limiting examples of porous minerals include: clinoptilolite, chabazite, kaolin, bentonite, montmorillonite, illite, natural zeolites, synthetic zeolites, clays, micas, phyllosilicates, aluminosilcates and silicates.

"Brunauer-Emmett-Teller (BET) adsorption method" refers to the method described by Brunauer et al. in "Adsorption of Gases in Multimolecular Layers", J. Am. Chem. Soc., 1938, 60(2), pp. 309-319, the disclosure of which is incorporated herein by reference. In one example, the BET adsorption method can be undertaken with a Micrometrics™ Gemini VI Surface Area Analyser.

"Ankerfume A25" refers to a form of clinoptilolite as made and sold by Sibelco. Ankerfume A25 has a D50 of 6.5µm. The particle size distribution was measured by laser diffraction, in one example with a Sympatec™ Helos BR with Quixel™. The technical characteristics of Ankerfume A25 are as shown in Table 1.

**Table 1: technical characteristics of Ankerfume A25 (mean values)**

| | | **A 25** | Method |
|---|---|---|---|
| + 45 micron | % | 1 | Alpine air jet |
| + 25 micron | % | 5 | Alpine air jet |
| D₅₀ | µm | 6.5 | Sympatec laser diffraction |
| Specific surface | m²/g | 16 - 22 | B.E.T. |
| Bulk density | kg/m³ | 570 | Böhme |

"Pharmaceutical" refers to compounds manufactured for use as a medicinal drug. Non-limiting examples of pharmaceuticals include: Diclofenac, Carbamazepine, lopamidol, Acetyl Sulfadiazine, Bezafibrate, Clofibric Acid, Diatrizoic Acid, Furosemide, Gemfibrozil, Ibuprofen, Ketoprofen, Naproxen, Niacin, Paroxetine and Sulfamethoxazole.

"Pharmaceutical metabolite" refers to a compound derived from a medicinal drug wherein the medicinal drug has been broken down, for example by the body, into a modified form. A pharmaceutical metabolite may be derived from any one of the non-limiting examples of pharmaceuticals above.

"Silane" refers to compounds with four substituents on a silicon atom.

"Alkoxysilane" refers to compounds which contain an organic group bonded through an oxygen atom to a Si atom. Alkoxysilane refers to compounds of the general formula: R₁O-SiR₂R₃R₄, where R₁ is an organic group and R₂,R₃ and R₄ can be the same or different and can be H, an organic group or O bonded to an organic group. Optionally, R₂, R₃ and R₄ are -OCH₃ and R₁ is a substituted or unsubstituted organic group. Optionally, R₂, R₃ and R₄ are the same as -OR₁.

"Organic group" refers to an alkyl, an aliphatic or an aryl group.

"Alkyl" refers to substituted or unsubstituted straight-chain or branched-chain hydrocarbons having 1, 2, 3, 4, 5, 6, 7, 8, 9, 10, 11, 12, 13, 14, 15, 16, 17, 18, 19 or 20, 21, 22, 23, 24 or 25 carbon atoms linked exclusively by single bonds and not having any cyclic structure. Optionally, alkyl includes methyl, ethyl, n-propyl, isopropyl, n-butyl, isobutyl, sec-butyl, tert-butyl, pentyl, iso-amyl, hexyl, heptyl, octyl, noyl, decyl, undecyl, dodecyl tridecyl, tetradecyl, pentadecyl, hexadecyl, heptadecyl, octadecyl, nonadecyl and eicosyl. "Substituted alkyl" refers to alkyl groups including one, two, three or more heteroatoms, for example N, O, P or S in the straight-chain or branched-chain hydrocarbon chain. "Unsubstituted alkyl" refers to alkyl groups including no heteroatoms in the straight-chain or branched-chain hydrocarbon chain.

"Aliphatic" includes alkyl, alkenyl, alkynyl, halogenated alkyl and cycloalkyl groups.

"Aryl" refers to substituted or unsubstituted aromatic hydrocarbons with a conjugated cyclic molecular ring structure of 3, 4, 5, 6, 7, 8, 9, 10, 11 or 12 carbon atoms. Optionally, aryl includes monocyclic, bicyclic or polycyclic rings. Optionally, aryl includes one to three additional ring structures selected from the group consisting of a cycloalkyl, a cycloalkenyl, a heterocycloalkyl, a heterocycloalkenyl, or a heteroaryl. Optionally, aryl includes phenyl (benzenyl), thiophenyl, indolyl, naphthyl, totyl, xylyl, anthracenyl, phenanthryl, azulenyl, biphenyl, naphthalenyl, 1 -methylnaphthalenyl, acenaphthenyl, acenaphthylenyl, anthracenyl, fluorenyl, phenalenyl, phenanthrenyl, benzo[a]anthracenyl, benzo[c]phenanthrenyl, chrysenyl, fluoranthenyl, pyrenyl, tetracenyl (naphthacenyl), triphenylenyl, anthanthrenyl, benzopyrenyl, benzo[a]pyrenyl, benzo[e]fluoranthenyl, benzo[ghi]perylenyl, benzo[j]fluoranthenyl, benzo[k]fluoranthenyl, corannulenyl, coronenyl, dicoronylenyl, helicenyl, heptacenyl, hexacenyl, ovalenyl, pentacenyl, picenyl, perylenyl, and tetraphenylenyl. Optionally, aryl refers to aryls substituted with 1, 2, 3, 4 or 5 substituents selected from the group consisting of H, lower alkyl, aryl, alkenyl, alkynyl, arylalkyl, alkoxy, aryloxy, arylalkoxy, alkoxyalkylaryl, alkylamino, arylamino, NH₂, OH, CN, NO₂, OCF₃, CF₃, Br, CI, F, 1 -amidino, 2-amidino, alkylcarbonyl, morpholino, piperidinyl, dioxanyl, pyranyl, heteroaryl, furanyl, thiophenyl, tetrazolo, thiazole, isothiazolo, imidazolo, thiadiazole, thiadiazole S-oxide, thiadiazole S,S-dioxide,pyrazolo, oxazole, isoxazole, pyridinyl, pyrimidinyl, quinoline, isoquinoline, SR"', SOR"', SO₂R"', CO₂R"', COR"', CONR"'R"', CSNR"'R"' and SOnNR"'R"', wherein R'" is alkyl or substituted alkyl.

"Adsorbent" refers to a substance which adsorbs another substance. In a non-limiting example, an adsorbent is a material which adsorbs a pharmaceutical, a pharmaceutical metabolite or a pharmaceutical and a pharmaceutical metabolite.

"Adsorption" refers to the adhesion of substances onto the surface of an adsorbent. Adsorption may be affected by the properties of the substance (for example, the pharmaceuticals and/or pharmaceutical metabolites) to be adsorbed, the types of adsorbent, the presence of surface groups, the presence of surface group competitors and the pH of the aqueous solution from which substances are adsorbed. The functional groups of pharmaceuticals and/or pharmaceutical metabolites may be similar. Adsorption may occur due to the specific interaction between surface groups on an adsorbent and the functional groups in a molecule to be adsorbed. Adsorption may be based upon any one or more of: Van der Waals, electrostatic attraction, coulomb forces, hydrogen bonding, base pairs (a special form of hydrogen bonding), acid-base reactions and/or π-stacking.

According to the present invention, an adsorbent material is formed by combining a porous mineral and a silane, thereby bonding the silane to the surface of the porous mineral. Typically, a silane is bonded to the surface of the porous mineral by mixing the solid porous mineral with a silane in solution (at a temperature of 20°C and at a pressure of 1 atmosphere), drying the mixture by heating in an oven at from 80 to 95°C for two hours and then washing away excess silane with water.

The adsorbent material of the present invention has a density of greater than 1 kg L⁻¹. As a result, the adsorbent material sinks in water.

The porous mineral used to form the adsorbent material comprises particles of porous mineral with a maximum dimension of from 1 µm to 50 µm. Optionally, the porous mineral used to form the adsorbent material comprises particles of porous mineral with a maximum dimension of from 1 µm to 5 µm.

The silane bonded to the surface of the porous mineral is optionally an alkoxysilane.

Non-limiting examples of silanes bonded to the surface of the porous mineral to form adsorbent materials according to the present invention include:
trimethoxy phenyl silane with the formula: 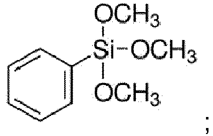 or,
trimethoxyl silyl propyl aniline with the formula: 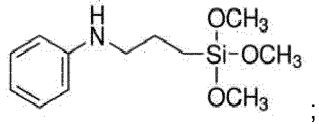 or,
dimethyl octadecyl [(3-trimethoxy silyl)propyl] ammonium chloride with the formula:

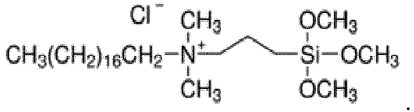

### Examples

### Example 1: Formation of adsorbent material

In one non-limiting example, an adsorbent material was formed by adding a porous mineral and a silane in solution, to a Henschel FM 40 A mixer. Mixing occurred at a temperature of 20°C and at a pressure of 1 atmosphere.

10 kg of the porous mineral, in this example Ankerfume A25, was added to a Henschel FM 40 A mixer. Thereafter, 3.57 kg of a silane in solution, in this example dimethyl octadecyl [(3-trimethoxy silyl)propyl] ammonium chloride (42% by weight solution of silane in methanol), was added to the mixer. The resultant mixture was mixed twice for five minutes at 1740 rpm.

The resultant mixture was then dried at 90 °C in an oven. The resulting solid material was then washed with water and then dried again at 90 °C in an oven.

The resulting solid material was adsorbent material according to the presently claimed invention, referred to as AM1 in the following examples. In this example, 15% by weight of AM1 was the silane bonded to the surface of the Ankerfume A25 (the balance being Ankerfume A25). Whilst this method is described with reference to a particular porous mineral and a particular silane, the method can be modified accordingly for different porous mineral and/or silane combinations.

In use, the adsorbent material may be formulated as a toilet block, urinal block, a gel, granules or powder.

The adsorbent material may be used in different buildings, for example homes, hospitals and office buildings. By placing the adsorbent material in a toilet, it adsorbs pharmaceuticals out of aqueous solution into solid form. This solid can be easily removed during water treatment.

### Example 2: Determining the adsorption of the pharmaceutical Diclofenac by adsorbent material composed of either: silica or Ankerfume A25; and, dimethyl octadecyl [(3-trimethoxy silyl)propyl] ammonium chloride

In example 2, the adsorption of the pharmaceutical diclofenac by different adsorbent materials was studied. Adsorbent material AM1 was compared with a different material formed using silica as a comparative mineral.

10 kg of silica, in this example, was added to a Henschel FM 40 A mixer. The silica was a silica gel with a pore size of 60Å, pore volume of 0.8 cm³/g and a surface area of 500m²/g. Thereafter, 3.57 kg of a silane in solution, in this example dimethyl octadecyl [(3-trimethoxy silyl)propyl] ammonium chloride (42% by weight solution of silane in methanol), was added to the mixer. The resultant mixture was mixed twice for five minutes at 1740 rpm.

The resultant mixture was then dried at 90 °C in an oven. The resulting solid material was then washed with water and then dried again at 90 °C in an oven.

The resulting solid material was adsorbent material, referred to as SIM1 in the following examples.

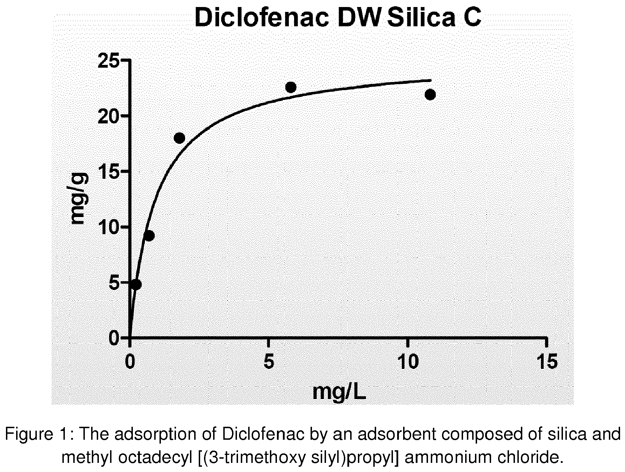

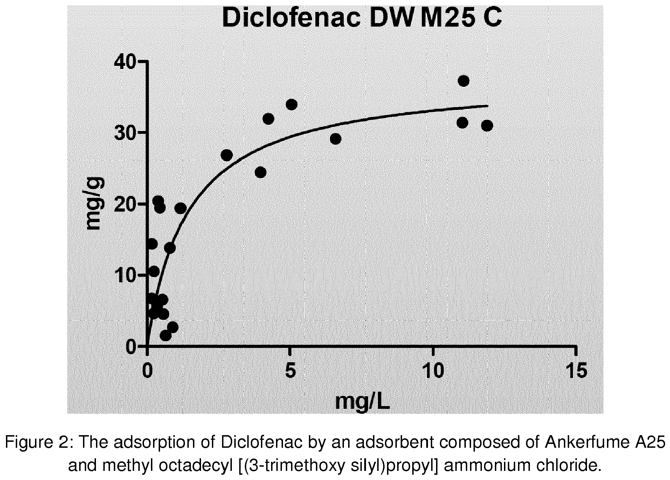

The adsorption of diclofenac with AM1 and SIM1 was measured as a function of diclofenac concentration versus amount adsorbed. Figures 1 and 2 depict the results. The figures show adsorption isotherms. The adsorption isotherms show the amounts of adsorbate adsorbed on the surface of adsorbent and the concentration of adsorbate in the solution. To obtain the graphs, a series of solutions with different concentrations of pharmaceutical were prepared. The same amount of adsorbent material was added to a reaction vessel in each case.

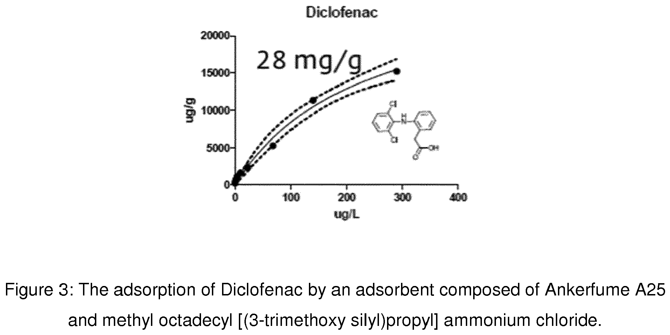

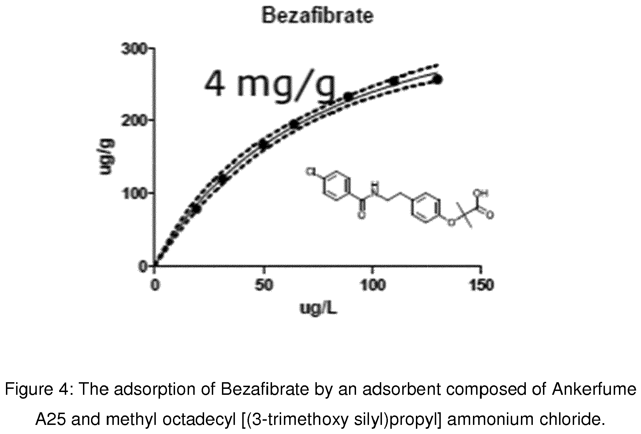

SIM1, as shown in Figure 3, demonstrated adsorption of Diclofenac. AM1, as shown in Figure 4, demonstrated even better adsorption) of Diclofenac.

Neither adsorbent material showed leakage of the adsorbed pharmaceutical. Therefore, without wishing to be bound by theory, the adsorbent materials of the present invention demonstrate strong adsorption capacity of the silane bonded to the surfaces of the minerals. By way of comparison, surface modified Ankerfume A25 (AM1) showed stronger adsorption than the comparative surface modified silica (SIM1). In this comparison, the specific surface area of Ankerfume A25 forming the AM1 is 16-22 m²/g, while the specific surface area of the silica gel forming the SIM1 is 500 m²/g.

### Example 3: Determining the adsorption of different pharmaceuticals using an adsorbent composed of Ankerfume A25 and dimethyl octadecyl [(3-trimethoxy silyl)propyl] ammonium chloride

In example 3, the adsorption of a range of pharmaceuticals by an adsorbent comprising Ankerfume A25 (as the porous mineral) and methyl octadecyl [(3-trimethoxy silyl)propyl] ammonium chloride (as the silane) was studied.

Material AM1 was formed as set out in example 1.

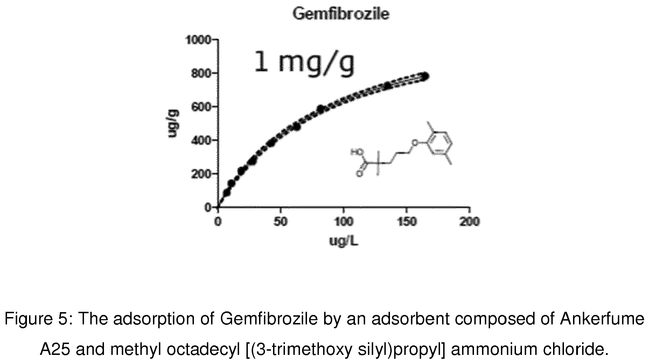

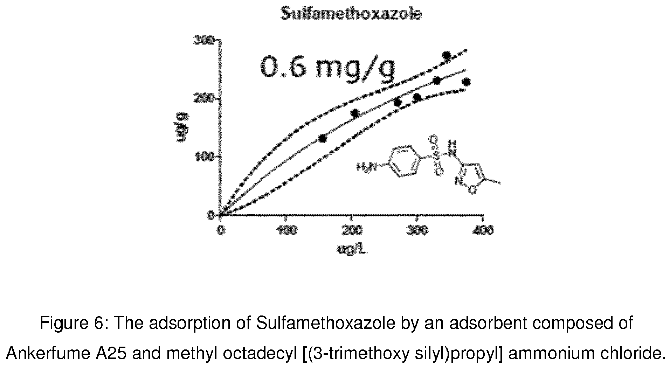

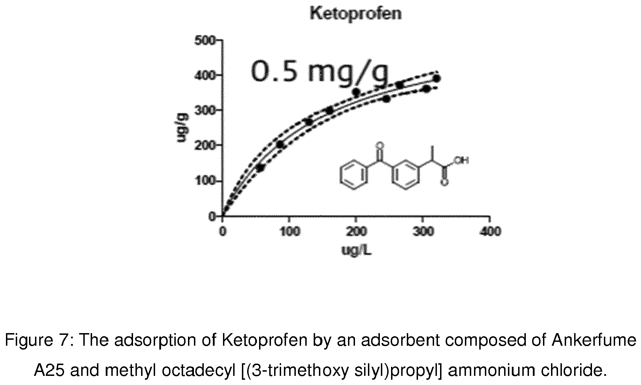

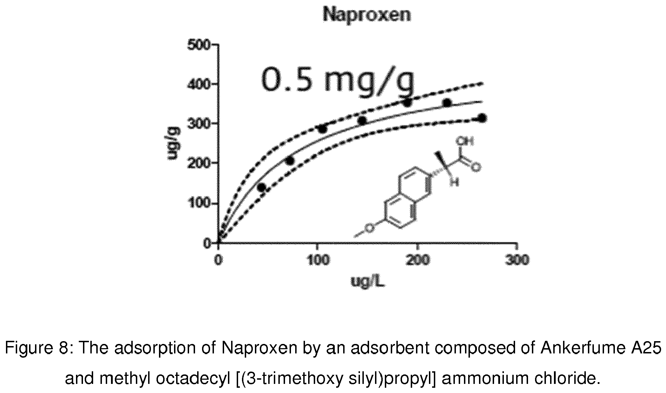

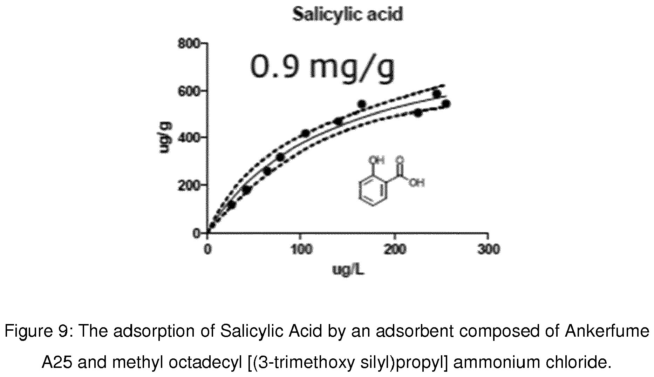

AM1 was then exposed to seven different pharmaceuticals, namely:
(i) Diclofenac (results shown in Figure 3);
(ii) Bezafibrate (results shown in Figure 4);
(iii) Gemfibrozile (results shown in Figure 5);
(iv) Sulfamethoxazole (results shown in Figure 6);
(v) Ketoprofen (results shown in Figure 7);
(vi) Naproxen (results shown in Figure 8); and,
(vii) Salicylic Acid (results shown in Figure 9).

Figures 3-9 (inclusive) depict the results. The figures show adsorption isotherms. The adsorption isotherms show the amounts of adsorbate adsorbed on the surface of adsorbent and the concentration of adsorbate in the solution. To obtain the graphs, a series of solutions with different concentrations of pharmaceutical were prepared. The same amount of adsorbent material was added to a reaction vessel in each case.

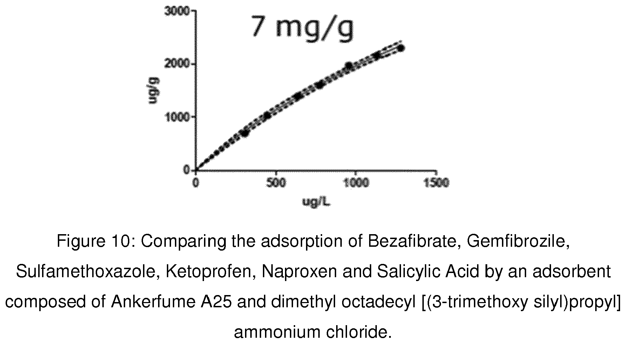

Figure 10 depicts the adsorption of six of the pharmaceuticals (all except diclofenac).

From figures 3-10, it can be observed that an adsorbent material according to the presently claimed invention can successfully adsorb a variety of pharmaceuticals (all the seven different pharmaceuticals were adsorbed by the adsorbent material AM1).

### Example 4: Formulation of an adsorbent composed of Ankerfume A25 and dimethyl octadecyl [(3-trimethoxy silyl)propyl] ammonium chloride

### Powder form

AM1 was formed as set out in Example 1. The AM1 was in powder form.

Artificial urine was prepared using the formulation of Martinez et al., PNAS, 2008, 105(50), pp. 19606-19611. The artificial urine solution contained 1.1mM lactic acid, 2.0mM citric acid, 25mM sodium bicarbonate, 170mM urea, 2.5mM calcium chloride, 90mM sodium chloride, 2.0mM magnesium sulfate, 10mM sodium sulfate, 7.0mM potassium dihydrogen phosphate, 7.0mM dipotassium hydrogen phosphate, and 25mM ammonium chloride. The components of the solution were mixed in Millipore-purified water. The pH of the solution was adjusted to 6.0 by addition of 1.0M hydrochloric acid. 28 mg/g Diclofenac was added to this artificial urine solution. The adsorbent material (AM1) in powder form was mixed with the artificial urine containing Diclofenac. The concentration of Diclofenac in solution was measured after five minutes. AM1 was found to adsorb most if not all of the Diclofenac.

The AM1 making up the powder adsorbs pharmaceutical, for example Diclofenac. Without wishing to be bound by theory, the solid particulate matter, which in a toilet can be flushed away, is believed to contain the Diclofenac adsorbed to the silane on the surface of the Ankerfume A25. This solid material is easily filtered out of waste water. Therefore, the adsorbent material of the present invention provides a beneficial way of removing pharmaceuticals from waste materials, e.g. urine.

### Toilet block

In one non-limiting example, a toilet block of approximately cuboid dimensions (6cm x 3cm x 3cm) can be formed in a mould in a humid environment. The toilet block can be placed in a suitably sized plastic container having holes in its sides to permit the flow of liquid into and out of the toilet block.

Running a solution, e.g. an artificial urine solution, containing a pharmaceutical through the toilet block toilet block is believed to result in the adsorption of pharmaceutical from the solution.

Over time, a toilet block formulated in this way falls apart, dropping solid particulate material into the water flushed from the toilet. The AM1 making up the toilet block adsorbs pharmaceutical, for example Diclofenac. Without wishing to be bound by theory, the solid particulate matter which is flushed from the toilet is believed to contain the Diclofenac adsorbed to the silane on the surface of the Ankerfume A25. This solid material is easily filtered out of waste water. Therefore, the adsorbent material of the present invention provides a beneficial way of removing pharmaceuticals from waste materials, e.g. urine.

Alternatively, the adsorbent material of the present invention may be formulated as urinal block. A urinal block is similar to toilet block, shaped appropriately for a urinal. Alternatively, the adsorbent material of the present invention may be formulated a gel. Such a gel can be placed on the rim of a toilet or urinal.

Alternatively, the adsorbent material of the present invention may be formulated as granules or as a powder. Such granules or powder may be placed into a toilet or urinal prior to or during the use of a toilet or urinal. Alternatively, such granules or powder can be introduced into waste water downstream from a toilet or urinal.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An adsorbent material for adsorbing a pharmaceutical, a pharmaceutical metabolite, or a pharmaceutical and a pharmaceutical metabolite, the adsorbent material comprising:
a porous mineral; and,
a silane bonded to the surface of the porous mineral;
wherein, the silane bonded to the surface of the porous mineral can adsorb a pharmaceutical, a pharmaceutical metabolite, or a pharmaceutical and a pharmaceutical metabolite.

2. The adsorbent material of claim 1, wherein the adsorbent material has a density of greater than 1 kg L⁻¹.

3. The adsorbent material of claim 1 or claim 2, wherein the porous mineral is a naturally occurring or a synthetic mineral with a specific surface area of 14 m²/g or higher, as obtained by the Brunauer-Emmett-Teller (BET) adsorption method; optionally, wherein the porous mineral has a specific surface area of 20 m²/g or higher, as obtained by the Brunauer-Emmett-Teller (BET) adsorption method; optionally, wherein the porous mineral has a specific surface area of from 20 m²/g to 100 m²/g, as obtained by the Brunauer-Emmett-Teller (BET) adsorption method; optionally, wherein the Brunauer-Emmett-Teller (BET) adsorption method is carried out with a Micrometrics™ Gemini VI Surface Area Analyser.

4. The adsorbent material of any one of claims 1 to 3, wherein the porous mineral comprises, or consists of, particles of porous mineral with a maximum dimension of from 1 µm to 50 µm; optionally, wherein the porous mineral comprises, or consists of, particles of porous mineral with a maximum dimension of from 1 µm to 5 µm.

5. The adsorbent material of any one of claims 1 to 4, wherein the porous mineral comprises: clinoptilolite, chabazite, kaolin, bentonite, montmorillonite, illite, natural zeolites, synthetic zeolites, clays, micas, phyllosilicates, aluminosilcates or silicates; optionally, wherein the porous mineral comprises: clinoptilolite, chabazite, kaolin, bentonite, montmorillonite or illite.

6. The adsorbent material of any one of claims 1 to 5, wherein the silane bonded to the surface of the porous mineral is an alkoxysilane.

7. The adsorbent material of claim 6, wherein the alkoxysilane has the formula: R₁O-SiR₂R₃R₄, where R₁ is an organic group and R₂,R₃ and R₄ can be the same or different and can be H, an organic group or O bonded to an organic group; optionally,
wherein R₂, R₃ and R₄ are -OCH₃ and R₁ is a substituted or unsubstituted organic group; optionally, wherein R₁ is:
-C₆H₅; -CH₂C₆H₅; -(CH₂)₂C₆H₅; -(CH₂)₃C₆H₅; -(CH₂)₄C₆H₅; -CH₂NHC₆H₅;-(CH₂)₂NHC₆H₅; -(CH₂)₃NHC₆H₅; -(CH₂)₄NHC₆H₅; -CH₂N⁺(CH₃)₂CH₂(CH₂)₁₆CH₃.Cl⁻;-(CH₂)₂N⁺(CH₃)₂CH₂(CH₂)₁₆CH₃.Cl⁻; -(CH₂)₃N⁺(CH₃)₂CH₂(CH₂)₁₆CH₃.Cl⁻;-CH₂N⁺(CH₃)₂CH₂(CH₂)ₓCH₃.Cl⁻; -(CH₂)₂N⁺(CH₃)₂CH₂(CH₂)ₓCH₃.Cl⁻;-(CH₂)₃N⁺(CH₃)₂CH₂(CH₂)ₓCH₃.Cl⁻, wherein x is 1, 2, 3, 4, 5, 6, 7, 8, 9, 10, 11, 12, 13, 14, 15, 17, 18, 19 or 20; and/or,
wherein the one or more organic groups are the same or different and are an alkyl, an aliphatic and/or an aryl group.

8. The adsorbent material of any one of claims 1 to 7, wherein the silane bonded to the surface of the porous mineral is:
trimethoxy phenyl silane with the formula: 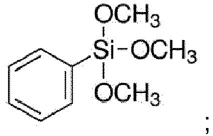 or,
trimethoxyl silyl propyl aniline with the formula: 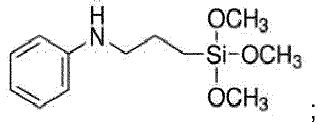 or, dimethyl octadecyl [(3-trimethoxy silyl)propyl] ammonium chloride with the formula:

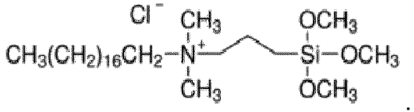

9. The adsorbent material of any one of claims 1 to 8, wherein the porous mineral is clinoptilolite and the silane bonded to the surface of the porous mineral is dimethyl octadecyl [(3-trimethoxy silyl)propyl] ammonium chloride, with the formula:

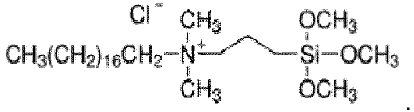

10. The adsorbent material of any one of claims 1 to 9, wherein the porous mineral is clinoptilolite; optionally, wherein the porous mineral is Ankerfume A25.

11. The adsorbent material of any one of claims 1 to 10, wherein:
the adsorbent material comprises, or consists of:
from 75% by weight to 98% by weight porous mineral; and,
from 2% by weight to 25% by weight silane bonded to the surface of the porous mineral;
optionally, plus any unavoidable impurities; or,
the adsorbent material comprises, or consists of:
from 80% by weight to 90% by weight porous mineral; and,
from 10% by weight to 20% by weight silane bonded to the surface of the porous mineral;
optionally, plus any unavoidable impurities.

12. The adsorbent material of any one of claims 1 to 11, wherein the is pharmaceutical is, or the pharmaceutical metabolite is derived from, any one of:
Diclofenac, Carbamazepine, lopamidol, Acetyl Sulfadiazine, Bezafibrate, Clofibric Acid, Diatrizoic Acid, Furosemide, Gemfibrozil, Ibuprofen, Ketoprofen, Naproxen, Niacin, Paroxetine and Sulfamethoxazole.

13. The adsorbent material of any one of claims 1 to 12, wherein the adsorbent material is formulated as a toilet block, a urinal block, a gel, granules or powder.

14. A method of forming an adsorbent material, the adsorbent material according to any one of claims 1 to 13; the method comprising the steps of:
providing a porous mineral;
contacting the porous mineral with a silane; and,
bonding the silane to the surface of the porous mineral.

15. The method of claim 14, further comprising:
the step of heating the adsorbent material to: from 80°C to 95°C; or, from 85°C to 90°C; and/or,
the step of washing the adsorbent material to remove non-bonded silane.

16. A method of adsorbing a pharmaceutical, a pharmaceutical metabolite, or a pharmaceutical and a pharmaceutical metabolite, from water, the method comprising the steps of:
providing an adsorbent material comprising a porous mineral and a silane bonded to the surface of the porous mineral;
contacting the adsorbent material with water containing a pharmaceutical, a pharmaceutical metabolite, or a pharmaceutical and a pharmaceutical metabolite; and,
adsorbing the pharmaceutical, pharmaceutical metabolite, pharmaceutical and pharmaceutical metabolite, onto the adsorbent material; optionally, wherein the adsorbent material is an adsorbent material according to any one of claims 1 to 13.
